# EUROPEAN PATENT APPLICATION

(11) **EP 4 576 552 A1**
(43) Date of publication of application: **25.06.2025**
(21) Application number: 24206080.4
(22) Date of filing: 11.10.2024
(51) Int. Cl.: H02M 7/487, H02M 7/5387, H02M 1/00, H02M 7/5395

(54) **POWER CONVERTER**

(30) Priority: 22.12.2023 CN 202311787411
(71) Applicant: Delta Electronics, Inc., Taoyuan City 33341 (TW)
(72) Inventor: SU, Yi-Li, 33341 Taoyuan City (TW); HUNG, Jui-Chien, 33341 Taoyuan City (TW); CHANG, Yun, 33341 Taoyuan City (TW); HUANG, Wen-Lung, 33341 Taoyuan City (TW); YEH, Po-Yi, 33341 Taoyuan City (TW)
(74) Representative: 2K Patentanwälte Blasberg Kewitz & Reichel

(57) **Abstract**

A power converter includes an inverter module and a control module. The inverter module includes a first arm and a second arm. The inverter module receives a first alternating current voltage, a plurality of first and second control signals. The first and second arms transform the first alternating current voltage to a first direct current voltage and a second direct current voltage according to the first and second control signals. The control module generates the first control signals to the first arm and generates the second control signals to the second arm according to the first alternating current voltage and a predetermined voltage. In each of the driving periods, the frequency of the first control signals is different from the frequency of the second control signals. In at least two of the driving periods, the frequencies of the first control signals are different.

## Description

### CROSS REFERENCE TO RELATED APPLICATIONS

This application claims priority of China Patent Application No. 202311787411.5, filed on December 22, 2023, the entirety of which is incorporated by reference herein.

### BACKGROUND OF THE INVENTION

### Field of the Invention

The present invention relates to a converter, and in particular it relates to a power converter for decreasing the switching power consumption and the temperature of a switch.

### Description of the Related Art

Generally speaking, when a traditional power converter performs a switching operation, the power converter may use a high-frequency switching signal to perform the switching operation on a switch. This may cause the switching power consumption and the temperature of the switch in the power converter to be too high. As a result, components become especially prone to aging, and it also limits the module power operation. Therefore, how to effectively solve the problem of the switching power consumption and the temperature of the switch in the power converter being too high has become an important issue.

### BRIEF SUMMARY OF THE INVENTION

It is an object of the present invention to provide a power converter configured to be operated more efficiently.

This problem is solved by a power converter as claimed in claim 1. Further advantageous embodiments are the subject-matter of the dependent claims.

A power converter of the present invention can be operated with a lower switching power consumption and temperature, so as to avoid the accelerated aging of components and limiting module power.

An embodiment of the present invention provides a power converter, which includes an inverter module and a control module. The inverter module includes a first arm and a second arm. The inverter module is configured to receive a first alternating current voltage, a plurality of first control signals and a plurality of second control signals. The first arm and the second arm are configured to transform the first alternating current voltage to a first direct current voltage and a second direct current voltage according to the first control signals and the second control signals. The control module is electrically connected to the first arm and the second arm. The control module is configured to receive the first alternating current voltage and a predetermined voltage, and generate the first control signals to the first arm and generate the second control signals to the second arm according to the first alternating current voltage and the predetermined voltage. In each of the driving periods, the frequency of the first control signals is different from the frequency of the second control signals. In at least two of the driving periods, the frequencies of the first control signals are different.

An embodiment of the present invention provides a power converter, which includes an inverter module, an inductor module and a control module. The inverter module includes a first upper switch module, a first lower switch module, a second upper switch module, a second lower switch module, a first diode, a second diode, a third diode and a fourth diode. The first diode is electrically connected to the first upper switch module. The second diode is electrically connected to the first diode and the first lower switch module. The third diode is electrically connected to the first diode and the second upper switch module. The fourth diode is electrically connected to the third diode and the second lower switch module. The inverter module is configured to receive a first alternating current voltage, a plurality of first control signals and a plurality of second control signals, and the first upper switch module, the first lower switch module, the second switch module and the second switch module are configured to transform the first alternating current voltage to a first direct current voltage and a second direct current voltage according to the first control signals and the second control signals. The inductor module is electrically connected to the first upper switch module, the first lower switch module, the second upper switch module and the second lower switch module. The inductor module is configured to receive a second alternating current voltage to generate the first alternating current voltage. The control module is electrically connected to the first upper switch module, the first lower switch module, the second upper switch module, the second lower switch module, and the inductor module. The control module is configured to receive the first alternating current voltage and a predetermined voltage, and generate the first control signals to the first upper switch module and the first lower switch module and generate the second control signals to the second upper switch module and the second lower switch module according to the first alternating current voltage and the predetermined voltage. In at least two of a plurality of driving periods, the frequencies of the first control signals are different.

According to the power converter disclosed by the present invention, the control module generates the first control signals to the first arm (or the first upper switch module and the first lower switch module) of the inverter module and generates the second control signals to the second arm (or the second upper switch module and the second lower switch module) of the inverter module according to the first alternating current voltage and the predetermined voltage, wherein in each of the driving periods, the frequency of the first control signals is different from the frequency of the second control signals, and in at least two of the driving periods, the frequencies of the first control signals are different. Therefore, it may effectively decrease the switching power consumption and the temperature of the first arm (or the first upper switch module and the first lower switch module) and the second arm (or the second upper switch module and the second lower switch module) of the inverter module, so as to avoid the accelerated aging of components and limiting module power.

### BRIEF DESCRIPTION OF THE DRAWINGS

The present invention can be more fully understood by reading the subsequent detailed description and examples with references made to the accompanying drawings, wherein:
FIG. 1 is a schematic view of a power converter according an embodiment of the present invention;
FIG. 2 is a waveform diagram of a first alternating current signal, a second alternating current signal, a first control signal and a second control signal according an embodiment of the present invention;
FIG. 3 is a schematic view of an inverter module in FIG. 1.
FIG. 4 is a schematic view of a control module in FIG. 1; and
FIG. 5 is a schematic view of a power converter according another embodiment of the present invention.

### DETAILED DESCRIPTION OF THE INVENTION

Technical terms of the disclosure are based on general definition in the technical field of the disclosure. If the disclosure describes or explains one or some terms, definition of the terms is based on the description or explanation of the disclosure. Each of the disclosed embodiments has one or more technical features. In possible implementation, a person skilled in the art would selectively implement all or some technical features of any embodiment of the disclosure or selectively combine all or some technical features of the embodiments of the disclosure.

In each of the following embodiments, the same reference number represents an element or component that is the same or similar.

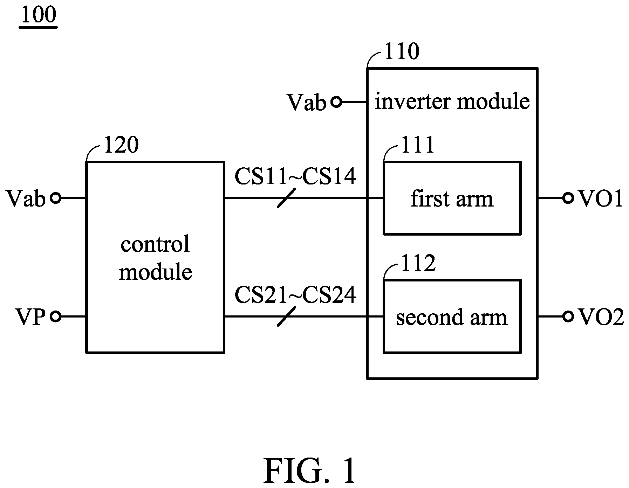

FIG. 1 is a schematic view of a power converter according an embodiment of the present invention. Please refer to FIG. 1. The power converter 100 includes an inverter module 110 and a control module 120.

The inverter module 110 may include a first arm 111 and a second arm 112. The inverter module 110 may receive a first alternating current voltage Vab, a plurality of first control signals CS11∼CS14 and a plurality of second control signals CS21~CS24. In addition, the first arm 111 and the second arm 112 of the inverter module 110 may transform the first alternating current voltage Vab to a first direct current voltage VO1 and a second direct current voltage VO2 according to the first control signals CS11~CS14 and the second control signals CS21~CS24. In the embodiment, the first arm 111 may perform a switching operation according to the first control signals CS11~CS14 and the second arm 112 may perform a switching operation according to the second control signals CS21~CS24, so that the inverter module 110 transforms the first alternating current voltage Vab to the first direct current voltage VO1 and the second direct current voltage VO2.

The control module 120 may be connected to the first arm 111 and the second arm 112. The control module 120 may receive the first alternating current voltage Vab and a predetermined voltage VP, and generate the first control signals CS11~CS14 to the first arm 111 and generate the second control signals CS21∼CS24 to the second arm 112 according to the first alternating current voltage Vab and the predetermined voltage VP. In the embodiment, the above predetermined voltage VP is, for example, a zero voltage (0V). Furthermore, the predetermined voltage VP is specifically a zero-crossing voltage of the first alternating current voltage Vab, so it is usually a preset voltage inside the power converter 100, and may also be an externally provided signal, but the embodiment of the present invention is not limited thereto.

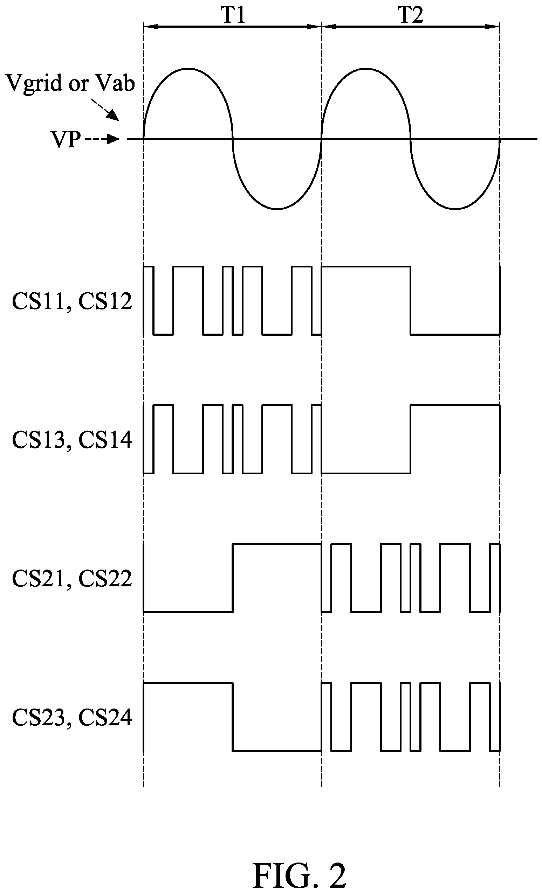

In the embodiment, in each of a plurality of driving periods, a frequency of the first control signals CS11~CS14 is different from a frequency of the second control signals CS21~CS24. The number of driving periods being two is provided as an example, such as driving periods T1-T2, as shown in FIG. 2. In the driving period T1, when the frequency of the first control signals CS11∼CS14 is high frequency, the frequency of the second control signals CS21~CS24 is low frequency. In the driving period T2, when the frequency of the first control signals CS11∼CS14 is low frequency, the frequency of the second control signals CS21~CS24 is high frequency. In other embodiments, in the driving period T1, when the frequency of the first control signals CS11~CS14 is low frequency, the frequency of the second control signals CS21~CS24 is high frequency. In the driving period T2, when the frequency of the first control signals CS11∼CS14 is high frequency, the frequency of the second control signals CS21~CS24 is low frequency. Furthermore, each of the above driving periods is, for example, a period of the first alternating current voltage Vab (or a second alternating current voltage Vgrid), specifically including a time length comprising a positive half-cycle voltage and a negative half-cycle voltage of one first alternating current voltage Vab.

In addition, the number of driving periods being ten is provided as an example, such as driving periods T1~T10. In some embodiments, in the driving period T1, when the frequency of the first control signals CS11∼CS14 is high frequency, the frequency of the second control signals CS21~CS24 is low frequency. In some embodiments, in the driving period T1, when the frequency of the first control signals CS11∼CS14 is low frequency, the frequency of the second control signals CS21~CS24 is high frequency. The rest of the driving periods T2~T10 may be deduced by analogy.

Furthermore, in at least two of the above driving periods, the frequency of the first control signals CS11~CS14 are different. The number of driving periods being two is provided as an example, such as driving periods T1-T2, as shown in FIG. 2. In the driving period T1, the frequency of the first control signals CS11~CS14 is high frequency, and in the driving period T2, the frequency of the first control signals CS11~CS14 is low frequency.

In addition, the number of driving periods being ten is provided as an example, such as driving periods T1~T10. In some embodiments, in the driving period T1, the frequency of the first control signals CS11~CS14 is high frequency, and in the driving periods T2-T10, the frequency of the first control signals CS11~CS14 is low frequency. In some embodiments, in the driving periods T1 and T6, the frequency of the first control signals CS11~CS14 is high frequency, and in the driving periods T2~T5 and T7-T10, the frequency of the first control signals CS11~CS14 is low frequency.

In some embodiments, in the driving periods T1-T2, the frequency of the first control signals CS11~CS14 is high frequency, and in the driving periods T3~T10, the frequency of the first control signals CS11~CS14 is low frequency. In some embodiments, in the driving periods T1, T3, T5, T7 and T9, the frequency of the first control signals CS11~CS14 is high frequency, and in the driving periods T2, T4, T6, T8 and T10, the frequency of the first control signals CS11~CS14 is low frequency. The rest of the corresponding relationships between the driving periods T1~T10 and the frequency of the first control signals CS11~CS14 may be deduced by analogy.

As mentioned above, through the control of the above control module 120, the frequency of the first control signals CS11∼CS14 or the second control signals CS21∼CS24 may not always be at the high frequency, thus the switching operation of the inverter module 110 may not be concentrated on the same arm (i.e., the first arm 111 or the second arm 112) for high frequency switching, and the switching power consumption and the temperature of any arm may not be too high. Therefore, it may effectively decrease the switching power consumption and the temperature of the first arm 111 and the second arm 112, so as to avoid the accelerated aging of components and limiting module power.

Furthermore, the period during which the frequencies corresponding to the first control signals CS11~CS14 and the second control signals CS21~CS24 are switched between the high frequency and the low frequency may be symmetrical. For example, the number of driving periods being ten is provided as an example, such as driving periods T1~T10. In some embodiments, in the driving periods T1, T3, T5, T7 and T9, the frequency of the first control signals CS11~CS14 is high frequency and the second frequency of the second control signals CS21~CS24 is low frequency, and in the driving period T2, T4, T6, T8 and T10, the frequency of the first control signals CS11~CS14 is low frequency and the frequency of the second control signals CS21~CS24 is high frequency.

In some embodiments, in the driving periods T1-T2, T5~T6 and T9~T10, the frequency of the first control signals CS11∼CS14 is high frequency and the frequency of the second control signals CS21~CS24 is low frequency, and in the driving periods T3~T4 and T7-T8, the frequency of the first control signals CS11~CS14 is low frequency and the frequency of the second control signals CS21~CS24 is high frequency. In some embodiments, in the driving periods T1~T5, the frequency of the first control signals CS11~CS14 is high frequency and the frequency of the second control signals CS21~CS24 is low frequency, and in the driving periods T6~T10, the frequency of the first control signals CS11~CS14 is low frequency and the frequency of the second control signals CS21~CS24 is high frequency. The rest of the corresponding relationships among the driving periods T1-T10, the frequency of the first control signals CS11~CS14 and the frequency of the second control signals CS21~CS24 may be deduced by analogy.

That is, the period during which the first control signals CS11~CS14 and the second control signals CS21~CS24 maintain the high frequency operation or the low frequency operation may be a multiple of the period of the first alternating current voltage Vab (or the second alternating current voltage Vgrid), and specifically it may be a multiple of the period of the positive half-cycle voltage and the negative half-cycle voltage of the first alternating current voltage Vab (or the second alternating current voltage Vgrid) (including 1~N times, N is a natural number). Namely, the first control signals CS11~CS14 and the second control signals CS21~CS24 perform one frequency switching in every period of the first alternating current voltage Vab (or the second alternating current voltage Vgrid), or every two periods of the first alternating current voltage Vab (or the second alternating current voltage Vgrid), and so on. Therefore, the time when the first arm 111 and the second arm 112 are in the high frequency switching and the low frequency switching may be symmetrical, so that the switching power consumption and the temperature of the first arm 111 and the second arm 112 are more balanced.

In addition, in some embodiments, a time point at which the first control signals CS11~CS14 and the second control signals CS21~CS24 switch between the high frequency operation or the low frequency operation may be any point (i.e., it is not limited to switching at the position of the zero-crossing point of the first alternating current voltage Vab or the second alternating current voltage Vgrid). However, after each switching, a time of a multiple of the period of one first alternating current voltage Vab (or the second alternating current voltage Vgrid) needs to pass before the next switching may be performed.

In addition, in some embodiments, a voltage level of a part of the first control signals CS11~CS14 is different from a voltage level of another part of the first control signals CS11~CS14. As shown in FIG. 2, when the voltage level of the first control signals CS11~CS12 is high voltage level, the voltage level of the first control signals CS13∼CS14 is the low voltage level. When the voltage level of the first control signals CS11~CS12 is low voltage level, the voltage level of the first control signals CS13~CS14 is high voltage level.

Furthermore, a voltage level of a part of the second control signals CS21~CS24 is different from a voltage level of another part of the second control signals CS21~CS24. As shown in FIG. 2. When the voltage level of the second control signals CS21~CS22 is high voltage level, the voltage level of the second control signals CS23~CS24 is low voltage level. When the voltage level of the second control signals CS21~CS22 is low voltage level, the voltage level of the second control signals CS23~CS24 is high voltage level.

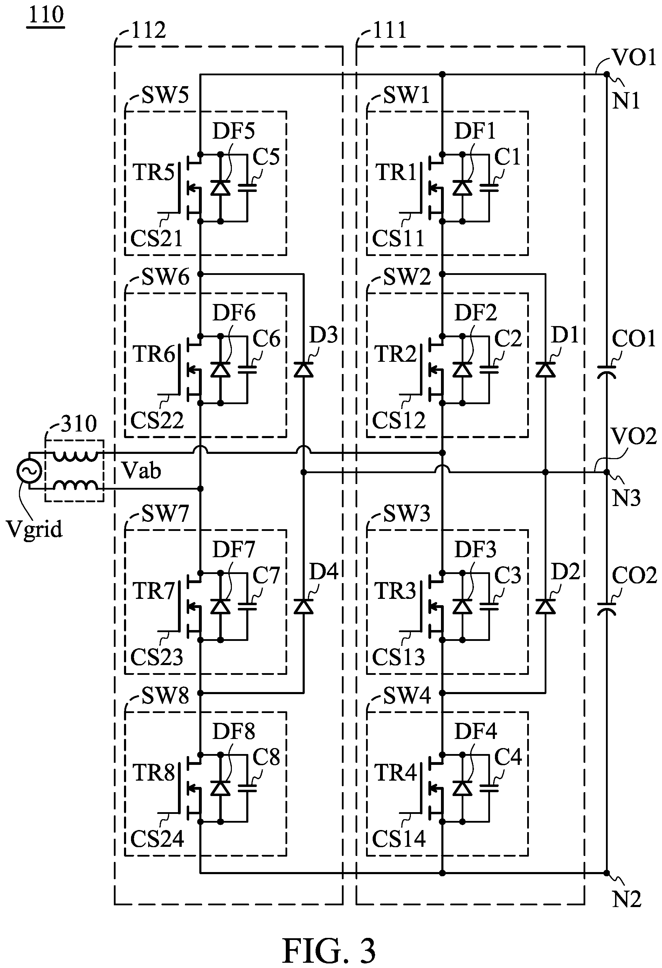

FIG. 3 is a schematic view of an inverter module in FIG. 1. Please refer to FIG. 3. The first arm 111 of the inverter module 110 includes a first switch unit SW1, a second switch unit SW2, a third switch unit SW3, a fourth switch unit SW4, a first diode D1 and a second diode D2.

The first switch unit SW1 has a first terminal, a second terminal and a control terminal. The first terminal of the first switch SW1 is electrically connected to a first direct current voltage node N1. The control terminal of the first switch unit SW1 receives the first control signal CS11. Furthermore, the first switch unit SW1 includes a first transistor TR1, a first freewheeling diode DF1 and a first capacitor C1. The first transistor TR1 has a first terminal, a second terminal and a control terminal. The first terminal of the first transistor TR1 is electrically connected to the first terminal of the first switch unit SW1. The second terminal of the first transistor TR1 is electrically connected to the second terminal of the first switch unit SW1. The control terminal of the first transistor TR1 is electrically connected to the control terminal of the first switch unit SW1. The first freewheeling diode DF1 has a first terminal (such as a cathode terminal) and a second terminal (such as an anode terminal). The first terminal of the first freewheeling diode DF1 is electrically connected to the first terminal of the first transistor TR1. The second terminal of the first freewheeling diode DF1 is electrically connected to the second terminal of the first transistor TR1.

The first capacitor C1 has a first terminal and a second terminal. The first terminal of the first capacitor C1 is electrically connected to the first terminal of the first freewheeling diode DF1. The second terminal of the first capacitor C1 is electrically connected to the second terminal of the first freewheeling diode DF1. In the embodiment, the first transistor TR1 may be an N-type transistor, wherein the first terminal, the second terminal and the control terminal of the first transistor TR1 are respectively a drain terminal, a source terminal and a gate terminal of the N-type transistor, but the embodiment is not limited thereto. In other embodiments, the first transistor TR1 may be a P-type transistor or another suitable transistor. In the embodiment, the first capacitor C1 may be a parasitic capacitance of the first transistor TR1 or a circuit equivalent capacitance.

In the embodiment, when the first transistor TR1 is a metal-oxide-semiconductor field-effect transistor (MOSFET), the first freewheeling diode DF1 may be an internal component (such as a parasitic diode) of the first transistor TR1. When the first transistor TR1 is an insulated gate bipolar transistor (IGBT), the first freewheeling diode DF1 may be an external component of the first transistor TR1. In the embodiment, the other switch units (SW2~SW8) includes the same of similar components and feature as the first switch unit SW1. Therefore, the following introduction of the internal details of the switch unit (i.e., the second transistor TR2 ~ the eighth transistor TR8, the second freewheeling diode DF2 ~ the eighth freewheeling diode DF8 and the second capacitor C2 ~ the eighth capacitor C8) may be determined by analogy with the description of the first transistor TR1, the first freewheeling diode DF1 and the first capacitor C1 and shown in FIG. 3, and the description thereof is not repeated herein.

The second switch unit SW2 has a first terminal, a second terminal and a control terminal. The first terminal of the second switch unit SW2 is electrically connected to the second terminal of the first switch unit SW1. The second terminal of the second switch unit SW2 receives the first alternating current voltage Vab. The control terminal of the second switch unit SW2 receives the first control signal CS12.

The third switch unit SW3 has a first terminal, a second terminal and a control terminal. The first terminal of the third switch unit SW3 is electrically connected to the second terminal of the second switch unit SW2. The control terminal of the third switch unit SW3 receives the first control signal CS13.

The fourth switch unit SW4 has a first terminal, a second terminal and a control terminal. The first terminal of the fourth switch unit SW4 is electrically connected to the second terminal of the third switch unit SW3. The control terminal of the fourth switch unit SW4 receives the first control signal CS14. The second terminal of the fourth switch unit SW4 is electrically connected to a second direct current voltage node N2.

The first diode D1 has a first terminal (such as a cathode terminal) and a second terminal (such as an anode terminal). The first terminal of the first diode D1 is electrically connected to the second terminal of the first switch unit SW1. The second terminal of the first diode D1 is electrically connected to a third direct current voltage node N3. The second diode D2 has a first terminal (such as a cathode terminal) and a second terminal (such as an anode terminal). The first terminal of the second diode D2 is electrically connected to the second terminal of the first diode D1. The second terminal of the second diode D2 is electrically connected to the second terminal of the third switch unit SW3.

The second arm 112 of the inverter module 110 includes a fifth switch unit SW5, a sixth switch unit SW6, a seventh switch unit SW7, an eighth switch unit SW8, a third diode D3 and a fourth diode D4.

The fifth switch unit SW5 has a first terminal, a second terminal and a control terminal. The first terminal of the fifth switch unit SW5 is electrically connected to the first terminal of the first switch unit SW1. The control terminal of the fifth switch unit SW5 receives the second control signal CS21.

The sixth switch unit SW6 has a first terminal, a second terminal and a control terminal. The first terminal of the sixth switch unit SW6 is electrically connected to the second terminal of the fifth switch unit SW5. The second terminal of the sixth switch unit SW6 receives the first alternating current voltage Vab. The control terminal of the sixth switch unit SW6 receives the second control signal CS22.

The seventh switch unit SW7 has a first terminal, a second terminal and a control terminal. The first terminal of the seventh switch unit SW7 is electrically connected to the second terminal of the sixth switch unit SW6. The control terminal of the seventh switch unit SW7 receives the second control signal CS23.

The eighth switch unit SW8 has a first terminal, a second terminal and a control terminal. The first terminal of the eighth switch unit SW8 is electrically connected to the second terminal of the seventh switch unit SW7. The second terminal of the eighth switch unit SW8 is electrically connected to the second terminal of the fourth switch unit SW4. The control terminal of the eighth switch unit SW8 receives the second control signal CS24.

The third diode D3 has a first terminal (such as a cathode terminal) and a second terminal (such as an anode terminal). The first terminal of the third diode D3 is electrically connected to the second terminal of the fifth switch unit SW5. The second terminal of the third diode D3 is electrically connected to the second terminal of the first diode D1. The fourth diode D4 has a first terminal (such as a cathode terminal) and a second terminal (such as an anode terminal). The first terminal of the fourth diode D4 is electrically connected to the second terminal of the third diode D3. The second terminal of the fourth diode D4 is electrically connected to the second terminal of the seventh switch unit SW7.

In addition, the inverter module 110 further includes an inductor module 310, a first voltage-stabilizing capacitor CO1 and a second voltage-stabilizing capacitor CO2. The inductor module 310 may be electrically connected to the first arm 111 and the second arm 112. The inductor module 310 may receive the second alternating current voltage Vgrid to generate the first alternating current voltage Vab. In the embodiment, the second alternating current voltage Vgrid is, for example, a mains voltage, and the first alternating current voltage Vab is, for example, an inverter voltage.

In addition, the control module 120 may further receive the second alternating current voltage Vgrid. In some embodiments, the control module 120 may generate the first control signals CS11~CS14 and the second control signals CS21~CS24 according to the first alternating current voltage Vab and the predetermined voltage VP or the first alternating current voltage Vab, the predetermined voltage VP and the second alternating current voltage Vgrid.

The first voltage-stabilizing capacitor CO1 has a first terminal and a second terminal. The first terminal of the first voltage-stabilizing capacitor CO1 is electrically connected to the first terminal of the first switch unit SW1 (i.e., the first direct current voltage node N1). The second terminal of the first voltage-stabilizing capacitor CO1 is electrically connected to the second terminal of the first diode D1 (i.e., the third direct current voltage node N3), so as to generate the first direct current voltage VO1 at two terminals of the first voltage-stabilizing capacitor CO1. The second voltage-stabilizing capacitor CO2 has a first terminal and a second terminal. The first terminal of the second voltage-stabilizing capacitor CO2 is electrically connected to the second terminal of the first voltage-stabilizing capacitor CO1. The second terminal of the second voltage-stabilizing capacitor CO2 is electrically connected to the second terminal of the fourth switch unit SW4 (i.e., the second direct current voltage node N2), so as to generate the second direct current voltage VO2 at two terminals of the second voltage-stabilizing capacitor CO2.

In the embodiment, when the first switch unit SW1 (the first transistor TR1) and the second switch unit SW2 (the second transistor TR2) are turned on, the third switch unit SW3 (the third transistor TR3) and the fourth switch unit SW4 (the fourth transistor TR4) are turned off, i.e., the voltage levels of the first control signals CS11~CS12 are high voltage levels, and the voltage levels of the first control signals CS13~CS14 are low voltage levels. When the first switch unit SW1 (the first transistor TR1) and the second switch unit SW2 (the second transistor TR2) are turned off, the third switch unit SW3 (the third transistor TR3) and the fourth switch unit SW4 (the fourth switch unit TR4) are turned on, i.e., the voltage levels of the first control signals CS11∼CS12 are low voltage levels, and the voltage levels of the first control signals CS13~CS14 are high voltage levels.

In addition, when the fifth switch unit SW5 (the fifth transistor TR5) and the sixth switch unit SW6 (the sixth transistor TR6) are turned on, the seventh switch unit SW7 (the seventh transistor TR7) and the eighth switch unit SW8 (the eighth transistor TR8) are turned off, i.e., the voltage levels of the second control signals CS21~CS22 are high voltage levels, and the voltage levels of the second control signals CS23~CS24 are low voltage levels. When the fifth switch unit SW5 (the fifth transistor TR5) and the sixth switch unit SW6 (the sixth transistor TR6) are turned off, the seventh switch unit SW7 (the seventh transistor TR7) and the eighth switch unit SW8 (the eighth transistor TR8) are turned on, i.e., the voltage levels of the second control signals CS21~CS22 are low voltage levels, and the voltage levels of the second control signals CS23~CS24 are high voltage levels.

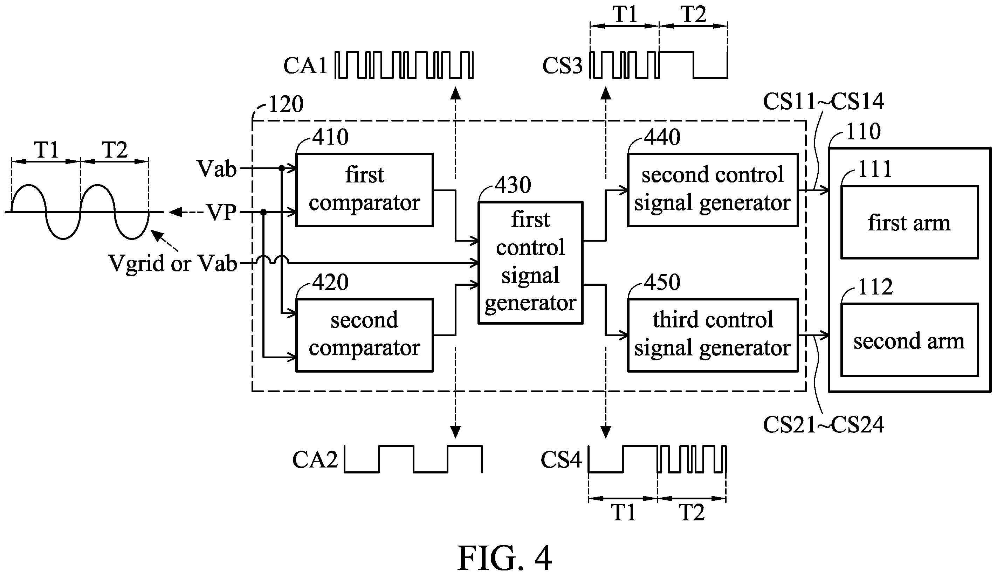

FIG. 4 is a schematic view of a control module in FIG. 1. In some embodiments, the control module 120 may receive the first alternating current voltage Vab and the predetermined voltage VP, generate a third control signal CS3 and a fourth control signal CS4 according to the first alternating current voltage Vab and the predetermined voltage VP, and generate the first control signals CS11~CS14 to the first arm 111 according to the third control signal CS3 and generate the second control signals CS21~CS24 to the second arm 112 according to the fourth control signal CS4. Please refer to FIG. 4. The control module 120 includes a first comparator 410, a second comparator 420, a first control signal generator 430, a second control signal generator 440 and a third control signal generator 450.

The first comparator 410 receives the first alternating current voltage Vab and the predetermined voltage VP. Then, the first comparator 410 may generate a first comparison signal CA1 according to the first alternating current voltage Vab, the predetermined voltage VP, a first carrier wave and a second carrier wave. In the embodiment, the first carrier wave is, for example, greater than the predetermined voltage VP, the second carrier wave is, for example, less than the predetermined voltage VP, and the first carrier wave and the second carrier wave are, for example, triangular waves, but the embodiment is not limited thereto. In addition, the first comparator 410 may compare the first alternating current voltage Vab with the first carrier wave to generate a first signal, and compare the first alternating current voltage Vab with the second carrier wave to generate a second signal. Then, the first comparator 410 processes the first signal and the second signal to generate the first comparison signal CA1. In the embodiment, the first comparator 410 is, for example, a quasi-two level (Q2L) comparator, and the first comparison signal CA1 is, for example, a high-frequency pulse wave modulation signal.

The second comparator 420 may receive the first alternating current voltage Vab and the predetermined voltage VP, and generate a second comparison signal CA2 according to the first alternating current voltage Vab and the predetermined voltage VP. Furthermore, the second comparator 420 may compare the first alternating current voltage Vab with the predetermined voltage VP to generate the second comparison signal CA2. For example, when the first alternating current voltage Vab is greater than the predetermined voltage VP, the second comparator 420 generate the second comparison signal CA2 with the low level. When the first alternating current voltage Vab is less than the predetermined voltage VP, the second comparator 420 generate the second comparison signal CA2 with the high level. In the embodiment, the second comparison signal CA2 is, for example, a low-frequency pulse wave modulation signal.

In some embodiments, the first control signal generator 430 may receive the first comparison signal CA1, the second comparison signal CA2 and the first alternating current voltage Vab, and generate the third control signal CS3 and the fourth control signal CS4 according to the first comparison signal CA1, the second comparison signal CA2 and the first alternating current voltage Vab. For example, the first control signal generator 430 may determine the driving period (such as the driving periods T1 or T2) according to the positive half-cycle voltage and the negative half-cycle voltage of the first alternating current voltage Vab. Then, in the driving period T1, the first control signal generator 430 generates, for example, the third control signal CS3 corresponding to the first comparison signal CA1 and the fourth control signal CS4 corresponding to the second comparison signal CA2. Afterward, in the driving period T2, the first control signal generator 430 generates, for example, the third control signal CS3 corresponding to the second comparison signal CA2 and the fourth control signal CS4 corresponding to the first comparison signal CA1.

In some embodiments, the first control signal generator 430 may receive the first comparison signal CA1, the second comparison signal CA2 and the second alternating current voltage Vgrid, and generate the third control signal CS3 and the fourth control signal CS4 according to the first comparison signal CA1, the second comparison signal CA2 and the second alternating current voltage Vgrid. For example, the first control signal generator 430 may determine the driving period (such as the driving period T1 or T2) according to the positive half-cycle voltage and the negative half-cycle voltage of the second alternating current voltage Vgrid. Then, in the driving period T1, the first control signal generator 430 generates, for example, the third control signal CS3 corresponding to the first comparison signal CA1 and the fourth control signal CS4 corresponding to the second comparison signal CA2. Afterward, in the driving period T2, the first control signal generator 430 generates, for example, the third control signal CS3 corresponding to the second comparison signal CA2 and the fourth control CS4 corresponding to the first comparison signal CA1.

The second control signal generator 440 receives the third control signal CS3, and generates the first control signals CS11~CS14 with the same operating frequency but different voltage levels according to the third control signal CS3. As shown in FIG. 2, when the voltage levels of the first control signals CS11~CS12 are high voltage levels, the voltage levels of the first control signals CS13~CS14 are low voltage levels. When the voltage levels of the first control signals CS11~CS12 are low voltage levels, the voltage levels of the first control signals CS13~CS14 are high voltage levels.

The third control signal generator 450 receives the fourth control signal CS4, and generates the second control signals CS21~CS24 with the same operating frequency but different voltage levels according to the fourth control signal CS4. As shown in FIG. 2, when the voltage levels of the second control signals CS21~CS22 are high voltage levels, the voltage levels of the second control signals CS23~CS24 are low voltage levels. When the voltage levels of the second control signals CS21~CS22 are low voltage levels, the voltage level of the second control signals CS23~CS24 are high voltage levels.

In the embodiments, in each of the driving periods, the frequency of the third control signal CS3 is different from the frequency of the fourth control signal CS4. In at least two of the above driving periods, the frequencies of the third control signal CS3 are different. For other changes in various combinations of driving period and control signal frequency, please refer to the description of the embodiment of the first control signals CS11~CS14 and the second control signals CS21~CS24 in FIG. 2, and the description thereof is not repeated herein.

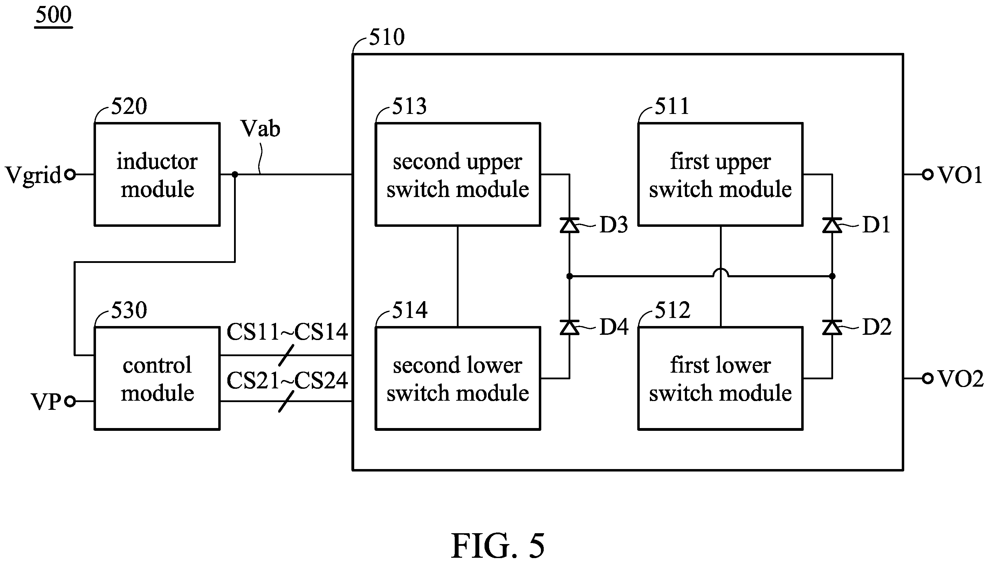

FIG. 5 is a schematic view of a power converter according another embodiment of the present invention. Please refer to FIG. 5. The power converter 500 includes an inverter module 510, an inductor module 520 and a control module 530.

The inverter module 510 includes a first upper switch module 511, a first lower switch module 512, a second upper switch module 513, a second lower switch module 514, a first diode D1, a second diode D2, a third diode D3 and a fourth diode D4. The first diode D1 is electrically connected to the first upper switch module 511. The second diode D2 is electrically connected to the first diode D1 and the first lower switch module 512. The third diode D3 is electrically connected to the first diode D1 and the second upper switch module 513. The fourth diode D4 is electrically connected to the third diode D3 and the second lower switch module 514. In the embodiment, the first diode D1, the second diode D2, the third diode D3 and the fourth diode D4 in FIG. 5 are the same as or similar to the first diode D1, the second diode D2, the third diode D3 and the fourth diode D4 in FIG. 3. Accordingly, the first diode D1, the second diode D2, the third diode D3 and the fourth diode D4 in FIG. 5 may be determined by analogy with the description of the embodiment in FIG. 3, and the description thereof is not repeated herein.

The inverter module 510 receive a first alternating current voltage Vab, a plurality of first control signals CS11~CS14 and a plurality of second control signals CS21~CS24. The first upper switch module 511, the first lower switch module 512, the second upper switch module 513 and the second lower switch module 514 may transform the first alternating current voltage Vab to a first direct current voltage VO1 and a second direct current voltage VO2 according to the first control signals CS11~CS14 and the second control signals CS21~CS24.

The inductor module 520 is electrically connected to the first upper switch module 511, the first lower switch module 512, the second upper switch module 513 and the second lower switch module 514. The inductor module 520 receives a second alternating current voltage Vgrid to generate the first alternating current voltage Vab. In the embodiment, the inductor module 520 in FIG. 5 is the same as or similar to the inductor module 310 in FIG. 3. Accordingly, the inductor module 520 in FIG. 5 may be determined by analogy with the description of the embodiment in FIG. 3, and the description thereof is not repeated herein.

The control module 530 is electrically connected to the first upper switch module 511, the first lower switch module 512, the second upper switch module 513, the second lower switch module 514 and the inductor module 520. The control module 530 receives the first alternating current voltage Vab, the second alternating current voltage Vgrid and predetermined voltage VP, and generates the first control signals CS11~CS14 to the first upper switch module 511 and the first lower switch module 512 and generates the second control signals CS21~CS24 to the second upper switch module 513 and the second lower switch module 514 according to the first alternating current voltage Vab and the predetermined voltage VP or the first alternating current voltage Vab, the predetermined voltage VP and the second alternating current voltage Vgrid. In the embodiment, the manner of operating the control module 530 is the same as or similar to the control manner of the control module 120 in FIG. 1 and FIG. 3. Accordingly, the manner of operating the control module 530 may be determined by analogy with the description of the embodiments in FIG. 1 and FIG. 3, and the description thereof is not repeated herein.

In addition, the first upper switch module 511 may include the first switch unit SW1 and the second switch unit SW2 of FIG. 3, the internal components and the electrical connection of the first switch unit SW1 and the second switch unit SW2 may be determined by analogy with the description of the embodiment in FIG. 3, and the description thereof is not repeated herein. The first lower switch module 512 may include the third switch unit SW3 and the fourth switch unit SW4 of FIG. 3, the internal components and the electrical connection of the third switch unit SW3 and the fourth switch unit SW4 may be determined by analogy with the description of the embodiment in FIG. 3, and the description thereof is not repeated herein. The second upper switch module 513 may include the fifth switch unit SW5 and the sixth switch unit SW6 of FIG. 3, the internal components and the electrical connection of the fifth switch unit SW5 and the sixth switch unit SW6 may be determined by analogy with the description of the embodiment in FIG. 3, and the description thereof is not repeated herein. The second lower switch module 514 may include the seventh switch unit SW7 and the eighth switch unit SW8 of FIG. 3, the internal components and the electrical connection of the seventh switch unit SW7 and the eighth switch unit SW8 may be determined by analogy with the description of the embodiment in FIG. 3, and the description thereof is not repeated herein.

Furthermore, the inverter module 510 further includes a first voltage-stabilizing capacitor CO1 and a second voltage-stabilizing capacitor CO2. In the embodiment, the first voltage-stabilizing capacitor CO1 and the second voltage-stabilizing capacitor CO2 in FIG. 5 are the same as or similar to the first voltage-stabilizing capacitor CO1 and the second voltage-stabilizing capacitor CO2 in FIG. 3. Accordingly, the first voltage-stabilizing capacitor CO1 and the second voltage-stabilizing capacitor CO2 in FIG. 5 may be determined by analogy with the description of the embodiment in FIG. 3, and the description thereof is not repeated herein.

In summary, according to the power converter disclosed by the embodiment of the present invention, the control module generates the first control signals to the first arm (or the first upper switch module and the first lower switch module) of the inverter module and generates the second control signals to the second arm (or the second upper switch module and the second lower switch module) of the inverter module according to the first alternating current voltage and the predetermined voltage, wherein in each of the driving periods, the frequency of the first control signals is different from the frequency of the second control signals, and in at least two of the driving periods, the frequencies of the first control signals are different. Therefore, it may effectively decrease the switching power consumption and the temperature of the first arm (or the first upper switch module and the first lower switch module) and the second arm (or the second upper switch module and the second lower switch module) of the inverter module, so as to avoid the accelerated aging of components and limiting module power.

While the present invention has been described by way of example and in terms of the preferred embodiments, it should be understood that the present invention is not limited to the disclosed embodiments. On the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A power converter (100), comprising:
an inverter module (110), comprising a first arm (111) and a second arm (112), wherein the inverter module (110) is configured to receive a first alternating current voltage (Vab), a plurality of first control signals (CS11~CS14) and a plurality of second control signals (CS21~CS24), and the first arm (111) and the second arm (112) are configured to transform the first alternating current voltage (Vab) to a first direct current voltage (VO1) and a second direct current voltage (VO2) according to the first control signals (CS11~CS14) and the second control signals (CS21~CS24); and
a control module (120), electrically connected to the first arm (111) and the second arm (112), wherein the control module (120) is configured to receive the first alternating current voltage (Vab) and a predetermined voltage (VP), and generate the first control signals (CS11∼CS14) to the first arm (111) and generate the second control signals (CS21∼CS24) to the second arm (112) according to the first alternating current voltage (Vab) and the predetermined voltage (VP);
wherein in each of a plurality of driving periods (T1~T2), a frequency of the first control signals (CS11~CS14) is different from a frequency of the second control signals (CS21~CS24);
wherein in at least two of the driving periods (T1-T2), the frequencies of the first control signals (CS11∼CS14) are different.

2. The power converter (100) as claimed in claim 1, wherein a level of a part of the first control signals (CS11~CS14) is different from a level of another part of the first control signals (CS11-CS14), and a level of a part of the second control signals (CS21~CS24) is different from a level of another part of the second control signals (CS21~CS24).

3. The power converter (100) as claimed in claim 1 or 2, wherein each of the driving periods (T1~T2) is a time length comprising a positive half-cycle voltage and a negative half-cycle voltage of the first alternating current voltage (Vab).

4. The power converter (100) as claimed in claim 3, wherein a period during which frequencies of the first control signals (CS11~CS14) and the second control signals (CS21~CS24) are switched is a multiple of the time length.

5. The power converter (100) as claimed in any of the preceding claims, wherein the inverter module (110) further comprises:
an inductor module (310), electrically connected to the first arm (111) and the second arm (112), wherein the inductor module (310) is configured to receive a second alternating current voltage (Vgrid) to generate the first alternating current voltage (Vab).

6. The power converter (100) as claimed in claim 5, wherein the control module (120) is further configured to receive the second alternating current voltage (Vgrid), and the control module (120) is configured to generate the first control signals (CS11~CS14) and the second control signals (CS21~CS24) according to the first alternating current voltage (Vab) and the predetermined voltage (VP) or the first alternating current voltage (Vab), the predetermined voltage (VP) and the second alternating current voltage (Vgrid).

7. The power converter (100) as claimed in any of the preceding claims, wherein the second alternating current voltage (Vgrid) is a mains voltage, and the first alternating current voltage (Vab) is an inverter voltage.

8. The power converter (100) as claimed in any of the preceding claims, wherein the control module (120) is further configured to generate a third control signal (CS3) and a fourth control signal (CS4) according to the first alternating current voltage (Vab) and the predetermined voltage (VP), and generate the first control signals (CS11~CS14) according to the third control signal (CS3) and generate the second control signals (CS21~CS24) according to the fourth control signal (CS4);
wherein in each of the driving periods (T1~T2), a frequency of the third control signal (CS3) is different from a frequency of the fourth control signal (CS4), the frequency of the first control signals (CS11~CS14) is the same as the frequency of the third control signal (CS3), and the frequency of the second control signals (CS21~CS24) is the same as the frequency of the fourth control signal (CS4);
wherein in at least two of the driving periods (T1~T2), the frequencies of the third control signals (CS3) are different.

9. The power converter (100) as claimed in claim 8, wherein a voltage level of a part of the first control signals (CS11~CS14) is the same as a voltage level of the third control signal (CS3), a voltage level of another part of the first control signals (CS11~CS14) is different from the voltage level of the third control signal (CS3), a voltage level of a part of the second control signals (CS21~CS24) is the same as a voltage level of the fourth control signal (CS4), and a voltage level of another part of the second control signals (CS21~CS24) is different from the voltage level of the fourth control signal (CS4).

10. The power converter (100) as claimed in claim 8 or 9, wherein the control module (120) comprises:
a first comparator (410), configured to receive the first alternating current voltage (Vab) and the predetermined voltage (VP), and generate a first comparison signal (CA1) according to the first alternating current voltage (Vab), the predetermined voltage (VP), a first carrier wave and a second carrier wave;
a second comparator (420), configured to receive the first alternating current voltage (Vab) and the predetermined voltage (VP), and generate a second comparison signal (CA2) according to the first alternating current voltage (Vab) and the predetermined voltage (VP);
a first control signal generator (430), configured to receive the first comparison signal (CA1), the second comparison signal (CA2) and the first alternating current voltage (Vab), and generate the third control signal (CS3) and the fourth control signal (CS4) according to the first comparison signal (CA1), the second comparison signal (CA2) and the first alternating current voltage (Vab);
a second control signal generator (440), configured to receive the third control signal (CS3), and generate the first control signals (CS11~CS14) according to the third control signal (CS3); and
a third control signal generator (450), configured to receive the fourth control signal (CS4), and generate the second control signals (CS21~CS24) according to the fourth control signals (CS4).

11. The power converter (100) as claimed in any of the preceding claims, wherein the first arm (111) comprises:
a first switch unit (SW1), having a first terminal, a second terminal and a control terminal, wherein the first terminal of the first switch unit (SW1) is electrically connected to a first direct current voltage node (N1), and the control terminal of the first switch unit (SW1) receives one of the first control signals (CS11);
a second switch unit (SW2), having a first terminal, a second terminal and a control terminal, wherein the first terminal of the second switch unit (SW2) is electrically connected to the second terminal of the first switch unit (SW1), the second terminal of the second switch unit (SW2) receives the first alternating current voltage (Vab), and the control terminal of the second switch unit (SW2) receives one of the first control signals (CS12);
a third switch unit (SW3), having a first terminal, a second terminal and a control terminal, wherein the first terminal of the third switch unit (SW3) is electrically connected to the second terminal of the second switch unit (SW2), and the control terminal of the third switch unit (SW3) receives one of the first control signals (CS13);
a fourth switch unit (SW4), having a first terminal, a second terminal and a control terminal, wherein the first terminal of the fourth switch unit (SW4) is electrically connected to the second terminal of the third switch unit (SW3), the second terminal of the fourth switch unit (SW4) is electrically connected to a second direct current voltage node (N2), and the control terminal of the fourth switch unit (SW4) receives one of the first control signals (CS14);
a first diode (D1), having a first terminal and a second terminal, wherein the first terminal of the first diode (D1) is electrically connected to the second terminal of the first switch unit (SW1), and the second terminal of the first diode (D1) is electrically connected to a third direct current voltage node (N3); and
a second diode (D2), having a first terminal and a second terminal, wherein the first terminal of the second diode (D2) is electrically connected to the second terminal of the first diode (D1), and the second terminal of the second diode (D2) is electrically connected to the second terminal of the third switch unit (SW3).

12. The power converter (100) as claimed in claim 11, wherein the second arm (112) comprises:
a fifth switch unit (SW5), having a first terminal, a second terminal and a control terminal, wherein the first terminal of the fifth switch unit (SW5) is electrically connected to the first terminal of the first switch unit (SW1), the control terminal of the fifth switch unit (SW5) receives one of the second control signals (CS21);
a sixth switch unit (SW6), having a first terminal, a second terminal and a control terminal, wherein the first terminal of the sixth switch unit (SW6) is electrically connected to the second terminal of the fifth switch unit (SW5), the second terminal of the sixth switch unit (SW6) receives the first alternating current voltage (Vab), and the control terminal of the sixth switch unit (SW6) receives one of the second control signals (CS22);
a seventh switch unit (SW7), having a first terminal, a second terminal and a control terminal, wherein the first terminal of the seventh switch unit (SW7) is electrically connected to the second terminal of the sixth switch unit (SW6), and the control terminal of the seventh switch unit (SW7) receives one of the second control signals (CS23);
an eighth switch unit (SW8), having a first terminal, a second terminal and a control terminal, wherein the first terminal of the eighth switch unit (SW8) is electrically connected to the second terminal of the seventh switch unit (SW7), the second terminal of the eighth switch unit (SW8) is electrically connected to the second terminal of the fourth switch unit (SW4), and the control terminal of the eighth switch unit (SW8) receives one of the second control signals (CS24);
a third diode (D3), having a first terminal and a second terminal, wherein the first terminal of the third diode (D3) is electrically connected to the second terminal of the fifth switch unit (SW5), and the second terminal of the third diode (D3) is electrically connected to the second terminal of the first diode (D1); and
a fourth diode (D4), having a first terminal and a second terminal, wherein the first terminal of the fourth diode (D4) is electrically connected to the second terminal of the third diode (D3), and the second terminal of the fourth diode (D4) is electrically connected to the second terminal of the seventh switch unit (SW7).

13. The power converter (100) as claimed in claim 11 or 12, wherein the inverter module (110) further comprises:
a first voltage-stabilizing capacitor (CO1), having a first terminal and a second terminal, wherein the first terminal of the first voltage-stabilizing capacitor (CO1) is electrically connected to the first terminal of the first switch unit (SW1), and the second terminal of the first voltage-stabilizing capacitor (CO1) is electrically connected to the second terminal of the second terminal of the first diode (D1); and
a second voltage-stabilizing capacitor (CO2), having a first terminal and a second terminal, wherein the first terminal of the second voltage-stabilizing capacitor (CO2) is electrically connected to the second terminal of the first voltage-stabilizing capacitor (CO1), and the second terminal of the second voltage-stabilizing capacitor (CO2) is electrically connected to the second terminal of the fourth switch unit (SW4).
